# FASCICULE DE BREVET EUROPEEN

(11) **EP 4 331 993 B1**
(45) Date de publication et mention de la délivrance du brevet: **11.06.2025**
(21) Numéro de dépôt: 23193699.8
(22) Date de dépôt: 28.08.2023
(51) Int. Cl.: B64D 27/00, B64D 45/00, B64D 37/32, F01D 21/04, B64D 37/30, F02C 3/22

(54) **ENSEMBLE PROPULSIF POUR AÉRONEF**
ANTRIEBSEINHEIT FÜR EIN FLUGZEUG
PROPULSION ASSEMBLY FOR AIRCRAFT

(30) Priorité: 30.08.2022 FR 2208672
(43) Date de publication de la demande: 06.03.2024
(73) Titulaire: AIRBUS OPERATIONS, 31060 Toulouse Cedex 9 (FR)
(72) Inventeur: CZAPLA, Lionel, 31060 TOULOUSE (FR); VARDELLE, Emmanuel, 31060 TOULOUSE (FR)
(74) Mandataire: Cabinet Le Guen Maillet

(56) Documents cités:
- DE-A1- 2 413 507
- GB-A- 1 453 873
- US-A- 3 974 313
- US-A- 4 818 176
- US-A1- 2005 025 615
- US-A1- 2008 073 460
- US-A1- 2010 101 205
- US-A1- 2018 283 204

## Description

La présente invention concerne un ensemble propulsif pour un aéronef, ledit ensemble propulsif comprenant un châssis fixé à une structure d'une voilure de l'aéronef, un système de motorisation à simple flux tel qu'un turbopropulseur, fixé au châssis, une canalisation de dihydrogène qui alimente la chambre de combustion du système de motorisation avec ledit dihydrogène et une plaque de protection fixée au châssis entre la canalisation de dihydrogène et la turbine du système de motorisation. L'invention concerne également un aéronef comportant au moins un tel ensemble propulsif.

### ÉTAT DE LA TECHNIQUE ANTÉRIEURE

Afin de se déplacer, un aéronef comporte classiquement au moins un ensemble propulsif comprenant un système de motorisation à simple flux tel qu'un turbopropulseur. Un tel système de motorisation comporte un noyau qui est enfermé dans un carter et qui comporte entre autres, de l'amont vers l'aval, un compresseur, une chambre de combustion et une turbine. Selon le cas, le système de motorisation comporte également une soufflante ou une hélice entraînée en rotation par le noyau. Le compresseur et la turbine possèdent chacun des aubes qui sont fixées à un arbre rotatif.

L'ensemble propulsif comporte également un châssis qui est fixé à une structure de l'aile de l'aéronef et constitue ainsi un mât d'accrochage sous l'aile.

Pour limiter la pollution due à l'utilisation de kérosène, il est envisagé d'utiliser le dihydrogène comme carburant dans la chambre de combustion.

Ce dihydrogène est amené depuis un réservoir jusqu'à la chambre de combustion par une canalisation de dihydrogène qui s'étend au moins en partie dans l'ensemble propulsif. Du fait de la structure de l'ensemble propulsif et de sa position sous l'aile et sur l'avant de l'aile, la canalisation de dihydrogène traverse le châssis en provenant de l'aile et court ainsi de l'arrière vers l'avant jusqu'à la chambre de combustion. Le document DE 2413507 A1 divulgue un ensemble propulsif de l'état de la technique.

Pour limiter l'impact de la température du noyau sur la canalisation de dihydrogène, celle-ci court à l'extérieur du carter pour rejoindre la chambre de combustion à travers le carter.

En cas d'incident sur le système de motorisation, il peut arriver que certaines aubes de la turbine ou du compresseur se détachent de l'arbre et du fait de leur vitesse traversent le carter au risque de couper la canalisation de dihydrogène.

### EXPOSÉ DE L'INVENTION

Un objet de la présente invention est de proposer un ensemble propulsif qui comporte des moyens de protection permettant de protéger une canalisation de dihydrogène passant au voisinage des aubes de la turbine du système de motorisation à simple flux.

À cet effet, est proposé un ensemble propulsif pour un aéronef comportant :
- un châssis,
- un système de motorisation fixé au châssis et comportant un noyau enfermé dans un carter et comportant une chambre de combustion et une turbine munie d'aubes rotatives autour d'un axe longitudinal,
- une canalisation d'alimentation destinée à acheminer du dihydrogène jusqu'à la chambre de combustion où la canalisation d'alimentation serpente à l'extérieur du carter en regard de la turbine avant de plonger dans la chambre de combustion à travers le carter, et
- une plaque de protection fixée au châssis par des moyens de fixation et disposée, d'une part, entre le carter et la canalisation d'alimentation et, d'autre part, entre la canalisation d'alimentation et la turbine, l'ensemble propulsif étant caractérisé en ce que les moyens de fixation comportent un système de fixation avant arrangé au niveau d'une partie avant de la plaque de protection et deux systèmes de fixation latérale disposés de part et d'autre d'un plan médian vertical de la plaque de protection à l'arrière de la partie avant, où le système de fixation avant comporte une bielle avant fixée de manière articulée par un premier point de liaison au châssis au niveau du plan médian de la plaque de protection et par deux deuxièmes points de liaison à la plaque de protection où les deuxièmes points de liaison sont disposés de part et d'autre du plan médian de la plaque de protection, et chaque système de fixation latérale comporte une bielle latérale fixée de manière articulée par un premier point de liaison au châssis et par deux deuxièmes points de liaison à la plaque de protection.

Avec un tel arrangement, une aube de la turbine qui se détacherait rencontrera la plaque de protection qui lui barre le chemin vers la canalisation de dihydrogène et elle sera alors déviée ou arrêtée.

Avantageusement, une extrémité avant de la plaque de protection est positionnée, perpendiculairement à l'axe longitudinal, au moins au niveau des aubes de la turbine qui sont les plus en avant, et l'extrémité arrière de la plaque de protection est positionnée, perpendiculairement à l'axe longitudinal, au moins au niveau des aubes de la turbine qui sont les plus en arrière.

Avantageusement, la plaque de protection dépasse en avant des aubes de la turbine qui sont les plus en avant et en arrière des aubes de la turbine qui sont les plus en arrière.

Selon un mode de réalisation particulier, vue de devant, la turbine tourne dans le sens anti-trigonométrique, la canalisation d'alimentation est disposée à tribord par rapport à un plan médian du système de motorisation et au-dessus du carter, et la plaque de protection s'étend à tribord horizontalement sur globalement la moitié de la largeur du châssis.

Selon un mode de réalisation particulier, la plaque de protection s'étend horizontalement sur la largeur du châssis et elle présente un pli en V dont la pointe est orientée vers l'axe longitudinal et où la canalisation d'alimentation est disposée au voisinage de l'ouverture dudit pli en V.

Selon un mode de réalisation particulier, la plaque de protection s'étend horizontalement sur la largeur du châssis et elle présente des nervures parallèles à l'axe longitudinal.

Selon un mode de réalisation particulier, la plaque de protection prend la forme d'une plaque ondulée.

Selon un mode de réalisation particulier, la plaque de protection prend la forme d'un profilé en V dont la pointe est orientée vers l'axe longitudinal et où la canalisation d'alimentation est disposée à l'intérieur de l'ouverture dudit V.

L'invention propose également un aéronef comportant une aile, un réservoir de dihydrogène et au moins un ensemble propulsif selon l'une des variantes précédentes où le châssis est fixé à l'aile et où la canalisation d'alimentation est fluidiquement connectée au réservoir de dihydrogène.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble propulsif selon l'invention,
Fig. 2 est une représentation schématique de côté et en coupe d'un système de motorisation de l'ensemble propulsif selon l'invention,
Fig. 3 est une représentation schématique en coupe selon la ligne III-III d'un ensemble propulsif selon une première variante de réalisation de l'invention,
Fig. 4 est une vue similaire à la Fig. 3 pour un ensemble propulsif selon une deuxième variante de réalisation de l'invention,
Fig. 5 est une vue similaire à la Fig. 3 pour un ensemble propulsif selon une troisième variante de réalisation de l'invention,
Fig. 6 est une vue similaire à la Fig. 3 pour un ensemble propulsif selon une quatrième variante de réalisation de l'invention,
Fig. 7 est une vue similaire à la Fig. 3 pour un ensemble propulsif selon une cinquième variante de réalisation de l'invention,
Fig. 8 est une vue similaire à la Fig. 3 pour un ensemble propulsif selon une sixième variante de réalisation de l'invention,
Fig. 9 est une vue de côté de la plaque de protection selon un mode de réalisation particulier,
Fig. 10 est une vue en coupe selon la ligne X-X de la Fig. 9, de la plaque de protection, et
Fig. 11 est une vue d'un détail de moyens de fixation.

### EXPOSÉ DÉTAILLÉ DE MODES DE RÉALISATION

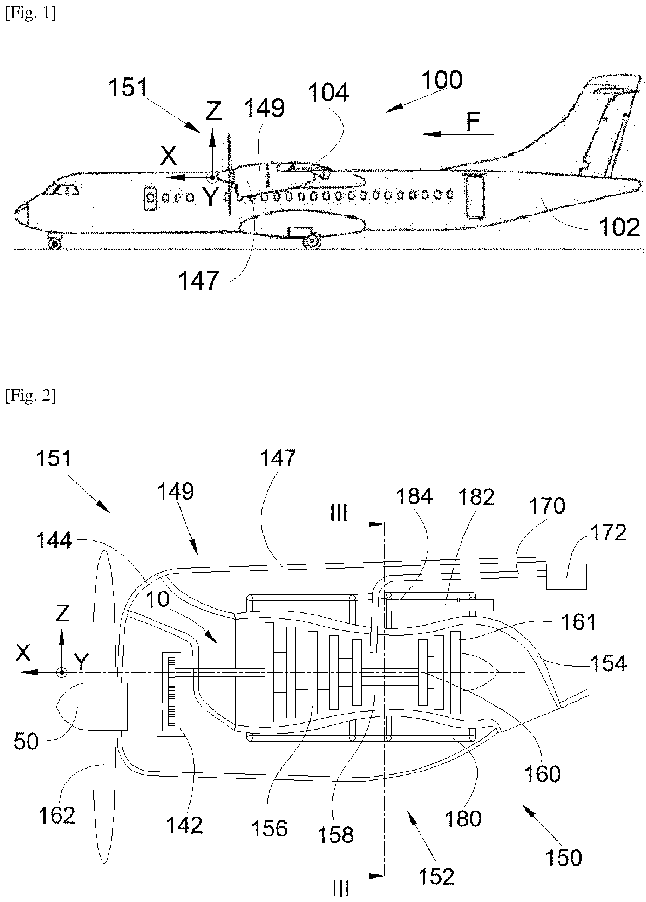

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

Dans la description qui suit, et par convention, on appelle X l'axe longitudinal du système de motorisation qui est parallèle à l'axe longitudinal de l'aéronef orienté positivement vers l'avant dans le sens d'avancement de l'aéronef, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

La Fig. 1 montre un aéronef 100 qui présente un fuselage 102 de part et d'autre duquel est fixée une aile 104. Sous chaque aile 104 est fixée au moins un ensemble propulsif 151 qui comporte une nacelle 149 constituée de capots 147 formant une surface extérieure aérodynamique.

La Fig. 2 montre l'ensemble propulsif 151 qui comporte également un système de motorisation 150 qui est représenté de manière schématique. L'ensemble propulsif 151 comporte un châssis 180 qui assure la fixation de l'ensemble propulsif 151 à une structure de l'aile 104 et constitue un mât d'accrochage. Dans le mode de réalisation de l'invention présenté à la Fig. 2, le châssis 180 prend la forme d'une cage constituée entre autres de poutres fixées les unes aux autres. Le châssis 180 est fixé à la structure de l'aile par des moyens de fixation connus de l'homme du métier.

Dans le mode de réalisation de l'invention présenté à la Fig. 2, le système de motorisation 150 est un turbopropulseur qui comporte un noyau 152 qui est enfermé dans un carter 154. Dans le mode de réalisation de l'invention présenté à la Fig. 2, le carter 154 est logé à l'intérieur du châssis 180 formant une cage et il y est fixé par tous moyens appropriés connus de l'homme du métier.

De l'air extérieur pénètre dans la nacelle 149 à travers une ouverture 144 prévue dans les capots 147 à l'avant de la nacelle 149.

À l'intérieur de la nacelle 149, le flux d'air primaire 10 pénètre dans le noyau 152 pour alimenter la chambre de combustion 158 en dioxygène.

Le carter 154 est ainsi ouvert à l'avant pour permettre l'introduction du flux primaire 10 dans le noyau 152 et ouvert à l'arrière pour permettre l'échappement des gaz issus de la combustion à travers une tuyère. Le noyau 152 comporte de l'amont vers l'aval, un compresseur 156, une chambre de combustion 158 et une turbine 160. Le compresseur 156 et la turbine 160 sont munis d'aubes 161 rotatives autour de l'axe longitudinal X.

Le flux primaire 10 passe ainsi successivement à travers le compresseur 156 où il est comprimé avant d'être injecté dans la chambre de combustion 158 où il est mélangé au carburant. Les gaz issus de la combustion passent ensuite à travers la turbine 160 et l'entraînent en rotation. La turbine 160 entraîne alors à son tour le compresseur 156 en rotation et les gaz sont ensuite éjectés à l'arrière.

Dans le cas d'un turbopropulseur, le système de motorisation 150 comporte une hélice 162 qui est à l'avant et entraînée en rotation par la turbine 160. Dans le mode de réalisation de l'invention présenté ici, le système de motorisation 150 comporte également une boîte de vitesse 142 montée entre la turbine 160 et l'hélice 162 qui tourne autour d'un axe de rotation 50 parallèle à l'axe longitudinal X et qui est ici décalé par rapport à l'axe longitudinal X. D'une manière générale, l'objet de l'invention est appliqué à un système de motorisation 150 à un flux primaire 10 à l'intérieur du noyau 152.

L'ensemble propulsif 151 comporte également une canalisation d'alimentation 170 qui permet d'acheminer du dihydrogène comme carburant jusqu'à la chambre de combustion 158 en étant fluidiquement connectée à un réservoir de dihydrogène 172 de l'aéronef 100. La canalisation d'alimentation 170 serpente ainsi depuis l'arrière de la nacelle 149 à l'extérieur du carter 154 en passant ainsi en regard et au large de la turbine 160 avant de plonger dans la chambre de combustion 158 à travers le carter 154.

En cas d'incident sur le système de motorisation 150, il peut arriver que les aubes 161 de la turbine 160 se détachent et traversent le carter 154. Pour protéger la canalisation d'alimentation 170, l'ensemble propulsif 151 comporte une plaque de protection 182 qui est fixée au châssis 180 par des moyens de fixation 184 et elle est disposée entre le carter 154 et la canalisation d'alimentation 170 et entre la canalisation d'alimentation 170 et la turbine 160. L'extrémité avant de la plaque de protection 182 est positionnée, perpendiculairement à l'axe longitudinal X, au moins au niveau des aubes 161 de la turbine 160 qui sont les plus en avant, et l'extrémité arrière de la plaque de protection 182 est positionnée, perpendiculairement à l'axe longitudinal X, au moins au niveau des aubes 161 de la turbine 160 qui sont les plus en arrière.

Ainsi en cas de détachement d'une aube 161 de la turbine 160, ladite aube 161 va entrer en collision avec la plaque de protection 182 et son trajet va être interrompu ou dévié avant qu'elle n'atteigne la canalisation d'alimentation 170.

En cas de détachement, une aube 161 de la turbine 160 peut partir radialement par rapport à l'axe longitudinal X, mais il peut y avoir une certaine dispersion et elle peut partir vers l'avant ou l'arrière. Ainsi, il est préférable d'allonger la plaque de protection 182 au-delà des aubes 161 de la turbine 160 pour prendre en compte les risques de dispersion. Ainsi, il est préférable que la plaque de protection 182 dépasse en avant des aubes 161 de la turbine 160 qui sont les plus en avant et en arrière des aubes 161 de la turbine 160 qui sont les plus en arrière.

Du fait de la position de la canalisation d'alimentation 170 qui est à l'arrière par rapport à la chambre de combustion 158, ladite canalisation d'alimentation 170 ne se trouve jamais en regard du compresseur 156 et il n'est donc pas nécessaire de placer une plaque de protection. Bien sûr si dans une autre configuration, la canalisation d'alimentation 170 se trouve en regard du compresseur 156, une plaque de protection similaire peut être mise en place.

Du fait de l'encombrement en partie basse du châssis 180 où le carter 154 est logé, la canalisation d'alimentation 170 s'étend préférentiellement en partie haute dudit châssis 180 et donc au-dessus du carter 154.

La plaque de protection 182 est réalisée par exemple en un alliage de titane avec une résistance spécifique élevée comme l'alliage connu sous l'appellation Ti-6Al-4V et présente pas exemple une épaisseur de l'ordre de 30 mm.

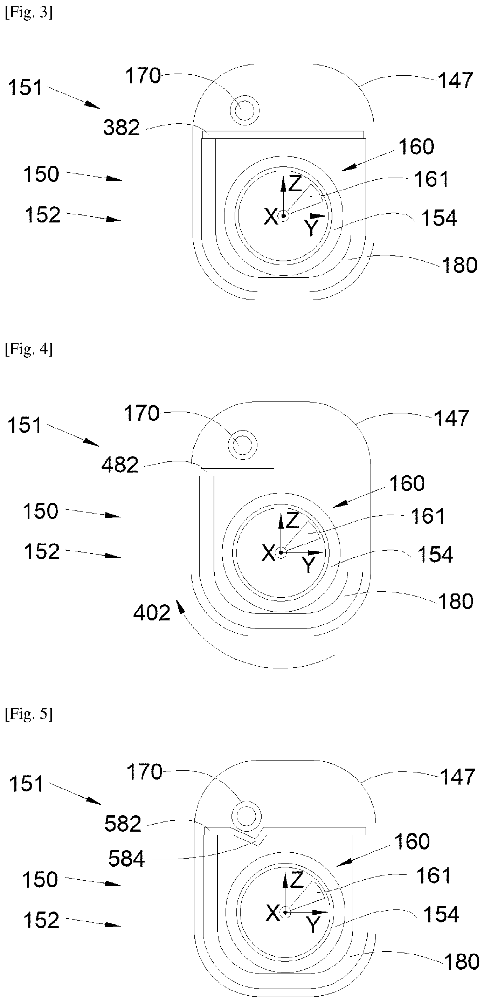

La Fig. 3 montre une première variante de l'invention où la plaque de protection 382 s'étend parallèlement au plan horizontal XY sur la largeur du châssis 180.

La Fig. 4 montre une deuxième variante de l'invention où, vue de devant, la turbine 160 tourne dans le sens anti-trigonométrique (flèche 402), où la canalisation d'alimentation 170 est disposée à tribord par rapport à un plan médian XZ du système de motorisation 150 et au-dessus du carter 154, et où la plaque de protection 482 s'étend à tribord parallèlement au plan horizontal XY sur globalement la moitié de la largeur du châssis 180. Un tel montage permet un gain de poids et, du fait du sens de rotation, seules les aubes 161 qui remontent à tribord sont susceptibles de venir heurter la canalisation d'alimentation 170.

La Fig. 5 montre une troisième variante où la plaque de protection 582 s'étend parallèlement au plan horizontal XY sur la largeur du châssis 180 et elle présente un pli 584 en V dont la pointe est orientée ici vers l'axe longitudinal X et où la canalisation d'alimentation 170 est disposée au voisinage de l'ouverture dudit pli 584 en V.

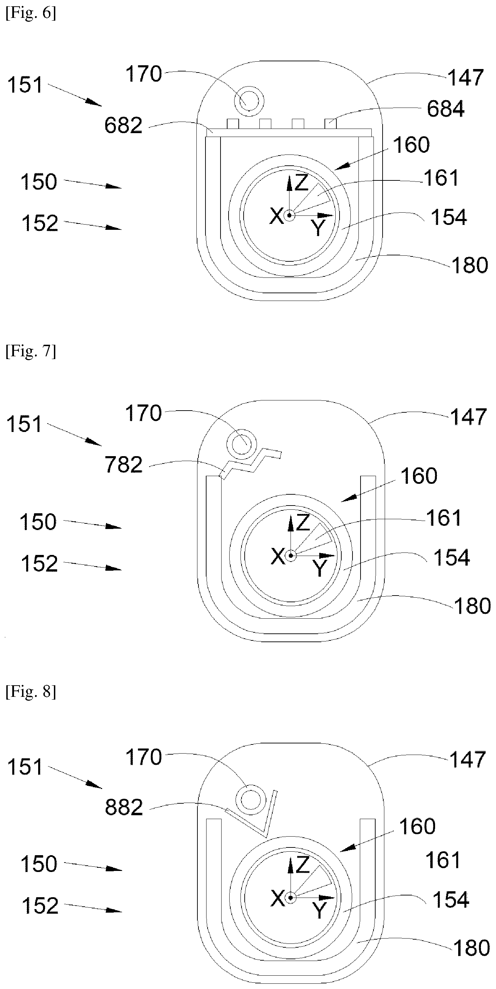

La Fig. 6 montre une quatrième variante où la plaque de protection 682 s'étend parallèlement au plan horizontal XY sur la largeur du châssis 180 et elle présente des nervures 684 parallèles à l'axe longitudinal X.

La Fig. 7 montre une cinquième variante où la plaque de protection 782 prend la forme d'une plaque ondulée qui s'étend ici sur globalement la moitié de la largeur du châssis 180 mais qui pourrait s'étendre sur toute la largeur du châssis 180.

La Fig. 8 montre une sixième variante où la plaque de protection 882 prend la forme d'un profilé en V dont la pointe est orientée vers l'axe longitudinal X et où la canalisation d'alimentation 170 est disposée à l'intérieur de l'ouverture dudit V.

Les moyens de fixation 184 peuvent être par exemple des vis de serrage, des rivets, etc. qui fixent la plaque de protection 182 au châssis 180.

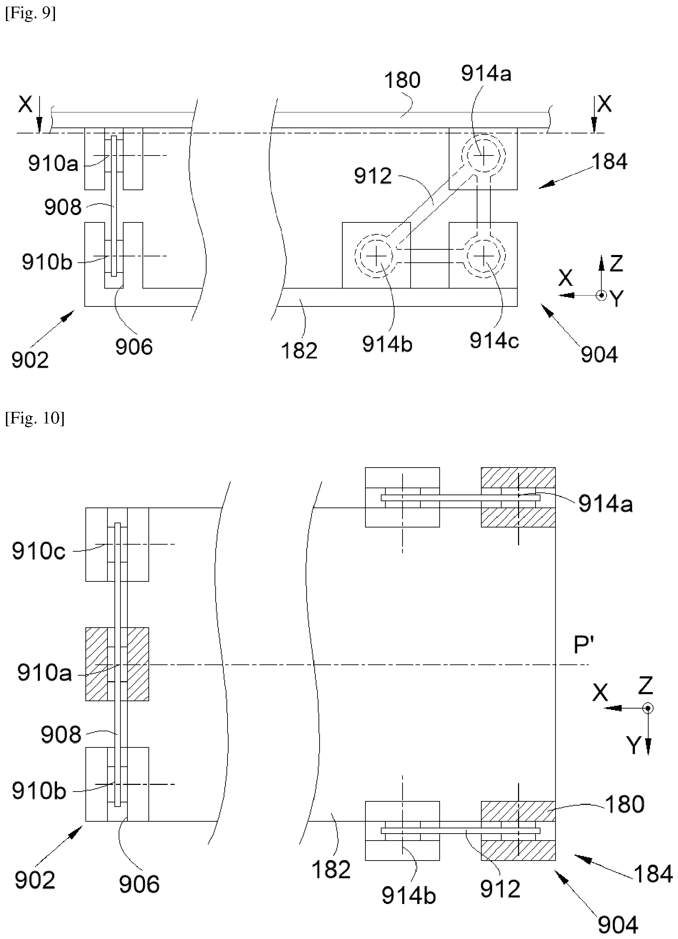

Les Figs. 9 et 10 montrent un mode de réalisation particulier des moyens de fixation 184 qui fixent la plaque de protection 182 au châssis 180, dans le cas où la plaque de protection 182 est disposée horizontalement.

La plaque de protection 182 est ici suspendue sous deux éléments du châssis 180, tels que des poutres parallèles à l'axe longitudinal X.

Les moyens de fixation 184 comportent un système de fixation avant 902 et deux systèmes de fixation latérale 904. Le système de fixation avant 902 est arrangé au niveau d'une partie avant 906 de la plaque de protection 182 et les systèmes de fixation latérale 904 sont disposés de part et d'autre d'un plan médian vertical P' de la plaque de protection 182 et parallèle à l'axe longitudinal X et à l'arrière de la partie avant 906.

Le système de fixation avant 902 comporte une bielle avant 908 fixée de manière articulée par un premier point de liaison 910a au châssis 180 au niveau du plan médian P' et par deux deuxièmes points de liaison 910b-c à la plaque de protection 182 où les deuxièmes points de liaison 910b-c sont disposés de part et d'autre du plan médian P'. Le premier point de liaison 910a est au-dessus des deuxièmes points de liaison 910b-c.

La bielle avant 908 est inscrite dans un plan perpendiculaire à l'axe longitudinal X.

Chaque système de fixation latérale 904 comporte une bielle latérale 912 fixée de manière articulée par un premier point de liaison 914a au châssis 180 et par deux deuxièmes points de liaison 914b-c à la plaque de protection 182 où les trois points de liaison 914a-c de chaque système de fixation latérale 904sont disposés dans un plan parallèle au plan médian P'. Le premier point de liaison 914a est au-dessus des deuxièmes points de liaison 914b-c.

Chaque point de liaison réalise au moins une liaison pivot, les axes des points de liaison 910a-c du système de fixation avant 902 sont parallèles à l'axe longitudinal X et les axes des points de liaison 914a-c de chaque système de fixation latérale 904 sont parallèles à l'axe transversal Y.

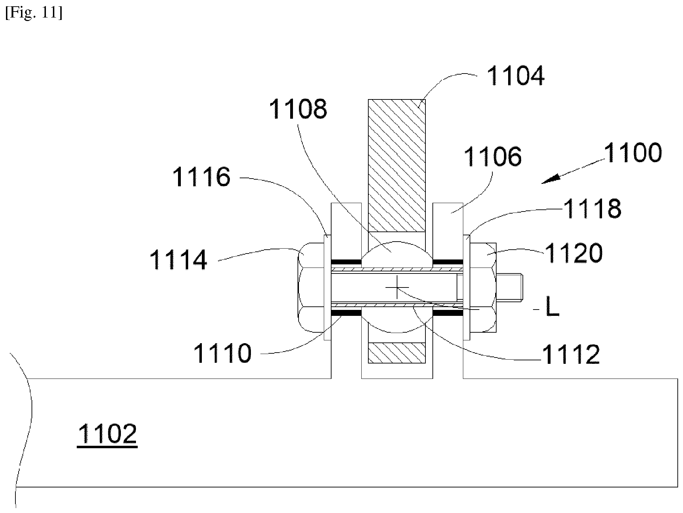

Mais préférentiellement, chaque point de liaison réalise une liaison rotule dont un mode de réalisation est montré à la Fig. 11.

La Fig. 11 montre un détail de chaque point de liaison 1100 entre un premier élément 1102 et un deuxième élément 1104. Le premier élément 1102 peut être le châssis 180 ou la plaque de protection 182 et le deuxième élément 1104 est une bielle 908, 912.

Le premier élément 1102 comporte une chape à deux branches 1106 entre lesquelles est arrangé un palier à rotule 1108 solidaire du second élément 1104. Chaque branche est percée d'un alésage dans lequel est inséré un manchon d'extrémité 1110. Un axe d'articulation 1112 se présentant sous la forme d'un fût cylindrique creux est, d'une part emmanché glissant dans chacun des manchons d'extrémité 1110, et d'autre part emmanché en force dans un alésage réalisé dans le palier à rotule 1108 afin de permettre un pivotement du palier à rotule 1108 par rapport à la chape autour d'un axe de liaison L.

D'un côté de la chape, une vis 1114 est insérée dans l'axe d'articulation 1112 et une première rondelle plate de blocage 1116 est emmanchée sur la tige de la vis 1114 et intercalée entre la tête de la vis 1114 et un manchon d'extrémité 1110, et de l'autre côté de la chape, une seconde rondelle plate de blocage 1118 est emmanchée sur la tige de la vis 1114 et intercalée entre l'autre manchon d'extrémité 1110 et une extrémité filetée de la vis où un écrou de serrage 1120 est serré au couple souhaité sur l'extrémité filetée de la vis 1114 pour venir contre la seconde rondelle plate de blocage 1118 et maintenir les rondelles 1116 et 1118 plaquées contre les manchons d'extrémités 1110.

L'assemblage des deux éléments l'un à l'autre est finalisé par l'immobilisation axiale, le long de l'axe de liaison L, des manchons d'extrémité 1110 et du palier à rotule 1108. Cette immobilisation est obtenue du fait du compactage entre l'écrou de serrage 1120 au contact de la seconde rondelle de blocage 1118 et de la tête de la vis 1114 au contact de la première rondelle de blocage 1116.

## Revendications

1. Ensemble propulsif (151) pour un aéronef (100) comportant :
- un châssis (180),
- un système de motorisation (150) fixé au châssis (180) et comportant un noyau (152) enfermé dans un carter (154) et comportant une chambre de combustion (158) et une turbine (160) munie d'aubes (161) rotatives autour d'un axe longitudinal (X),
- une canalisation d'alimentation (170) destinée à acheminer du dihydrogène jusqu'à la chambre de combustion (158) où la canalisation d'alimentation (170) serpente à l'extérieur du carter (154) en regard de la turbine (160) avant de plonger dans la chambre de combustion (158) à travers le carter (154), et
- une plaque de protection (182) fixée au châssis (180) par des moyens de fixation (184) et disposée, d'une part, entre le carter (154) et la canalisation d'alimentation (170) et, d'autre part, entre la canalisation d'alimentation (170) et la turbine (160), l'ensemble propulsif (151) étant **caractérisé en ce que** les moyens de fixation (184) comportent un système de fixation avant (902) arrangé au niveau d'une partie avant (906) de la plaque de protection (182) et deux systèmes de fixation latérale (904) disposés de part et d'autre d'un plan médian vertical (P') de la plaque de protection (182) à l'arrière de la partie avant (906), où le système de fixation avant (902) comporte une bielle avant (908) fixée de manière articulée par un premier point de liaison (910a) au châssis (180) au niveau du plan médian (P') de la plaque de protection (182) et par deux deuxièmes points de liaison (910b-c) à la plaque de protection (182) où les deuxièmes points de liaison (910b-c) sont disposés de part et d'autre du plan médian (P') de la plaque de protection (182), et où chaque système de fixation latérale (904) comporte une bielle latérale (912) fixée de manière articulée par un premier point de liaison (914a) au châssis (180) et par deux deuxièmes points de liaison (914b-c) à la plaque de protection (182).

2. Ensemble propulsif (151) selon la revendication 1, **caractérisé en ce qu'**une extrémité avant de la plaque de protection (182) est positionnée, perpendiculairement à l'axe longitudinal (X), au moins au niveau des aubes (161) de la turbine (160) qui sont les plus en avant, et l'extrémité arrière de la plaque de protection (182) est positionnée, perpendiculairement à l'axe longitudinal (X), au moins au niveau des aubes (161) de la turbine (160) qui sont les plus en arrière.

3. Ensemble propulsif (151) selon la revendication 2, **caractérisé en ce que** la plaque de protection (182) dépasse en avant des aubes (161) de la turbine (160) qui sont les plus en avant et en arrière des aubes (161) de la turbine (160) qui sont les plus en arrière.

4. Ensemble propulsif (151) selon l'une des revendications 1 à 3, **caractérisé en ce que** vue de devant, la turbine (160) tourne dans le sens anti-trigonométrique (402), **en ce que** la canalisation d'alimentation (170) est disposée à tribord par rapport à un plan médian (XZ) du système de motorisation (150) et au-dessus du carter (154), et **en ce que** la plaque de protection (482) s'étend à tribord horizontalement sur globalement la moitié de la largeur du châssis (180).

5. Ensemble propulsif (151) selon l'une des revendications 1 à 3, **caractérisé en ce que** la plaque de protection (582) s'étend horizontalement sur la largeur du châssis (180) et **en ce qu'**elle présente un pli (584) en V dont la pointe est orientée vers l'axe longitudinal (X) et où la canalisation d'alimentation (170) est disposée au voisinage de l'ouverture dudit pli (584) en V.

6. Ensemble propulsif (151) selon l'une des revendications 1 à 3, **caractérisé en ce que** la plaque de protection (682) s'étend horizontalement sur la largeur du châssis (180) et **en ce qu'**elle présente des nervures (684) parallèles à l'axe longitudinal (X).

7. Ensemble propulsif (151) selon l'une des revendications 1 à 3, **caractérisé en ce que** la plaque de protection (782) prend la forme d'une plaque ondulée.

8. Ensemble propulsif (151) selon l'une des revendications 1 à 3, **caractérisé en ce que** la plaque de protection (882) prend la forme d'un profilé en V dont la pointe est orientée vers l'axe longitudinal (X) et où la canalisation d'alimentation (170) est disposée à l'intérieur de l'ouverture dudit V.

9. Aéronef (100) comportant une aile (104), un réservoir de dihydrogène (172) et au moins un ensemble propulsif (151) selon l'une des revendications précédentes où le châssis (180) est fixé à l'aile (104) et où la canalisation d'alimentation (170) est fluidiquement connectée au réservoir de dihydrogène (172).

## Patentansprüche

1. Antriebseinheit (151) für ein Luftfahrzeug (100), welche aufweist:
- einen Rahmen (180),
- ein Motorisierungssystem (150), das an dem Rahmen (180) befestigt ist und einen Kern (152) aufweist, der in einem Gehäuse (154) eingeschlossen ist und eine Brennkammer (158) und eine Turbine (160), die über um eine Längsachse (X) drehende Schaufeln (161) verfügt, aufweist,
- eine Versorgungsleitung (170), die dazu bestimmt ist, Wasserstoff bis zu der Brennkammer (158) zu leiten, wobei sich die Versorgungsleitung (170) außerhalb des Gehäuses (154) gegenüber der Turbine (160) schlängelt, bevor sie durch das Gehäuse (154) hindurch in die Brennkammer (158) eintritt, und
- eine Schutzplatte (182), die durch Befestigungsmittel (184) an dem Rahmen (180) befestigt ist und einerseits zwischen dem Gehäuse (154) und der Versorgungsleitung (170) und andererseits zwischen der Versorgungsleitung (170) und der Turbine (160) angeordnet ist, wobei die Antriebseinheit (151) **dadurch gekennzeichnet ist, dass** die Befestigungsmittel (184) ein vorderes Befestigungssystem (902), das an einem vorderen Teil (906) der Schutzplatte (182) eingerichtet ist, und zwei laterale Befestigungssysteme (904), die auf beiden Seiten einer vertikalen Mittelebene (P') der Schutzplatte (182) hinter dem vorderen Teil (906) angeordnet sind, aufweisen, wobei das vordere Befestigungssystem (902) eine vordere Stange (908) aufweist, die durch einen ersten Verbindungspunkt (910a) im Bereich der Mittelebene (P') der Schutzplatte (182) an dem Rahmen (180) und durch zwei zweite Verbindungspunkte (910b-c) an der Schutzplatte (182) gelenkig befestigt ist, wobei die zweiten Verbindungspunkte (910b-c) auf beiden Seiten der Mittelebene (P') der Schutzplatte (182) angeordnet sind, und wobei jedes laterale Befestigungssystem (904) eine laterale Stange (912) aufweist, die durch einen ersten Verbindungspunkt (914a) an dem Rahmen (180) und durch zwei zweite Verbindungspunkte (914b-c) an der Schutzplatte (182) gelenkig befestigt ist.

2. Antriebseinheit (151) nach Anspruch 1, **dadurch gekennzeichnet, dass** ein vorderes Ende der Schutzplatte (182) senkrecht zu der Längsachse (X) mindestens im Bereich der Schaufeln (161) der Turbine (160), die sich am weitesten vorne befinden, positioniert ist und dass das hintere Ende der Schutzplatte (182) senkrecht zu der Längsachse (X) mindestens im Bereich der Schaufeln (161) der Turbine (160), die sich am weitesten hinten befinden, positioniert ist.

3. Antriebseinheit (151) nach Anspruch 2, **dadurch gekennzeichnet, dass** sich die Schutzplatte (182) über die Schaufeln (161) der Turbine (160), die sich am weitesten vorne befinden, nach vorne hinaus und über die Schaufeln (161) der Turbine (160), die sich am weitesten hinten befinden, nach hinten hinaus erstreckt.

4. Antriebseinheit (151) nach einem der Ansprüche 1 bis 3, **dadurch gekennzeichnet, dass** die Turbine (160) von vorne gesehen im anti-trigonometrischen Sinn (402) dreht, dass die Versorgungsleitung (170) in Bezug auf eine Mittelebene (XZ) des Motorisierungssystems (150) steuerbordseitig und oberhalb des Gehäuses (154) angeordnet ist und dass sich die Schutzplatte (482) steuerbordseitig horizontal über etwa die Hälfte der Breite des Rahmens (180) erstreckt.

5. Antriebseinheit (151) nach einem der Ansprüche 1 bis 3, **dadurch gekennzeichnet, dass** sich die Schutzplatte (582) horizontal über die Breite des Rahmens (180) erstreckt und dass sie einen V-Falz (584) umfasst, dessen Spitze zu der Längsachse (X) gerichtet ist, und wobei die Versorgungsleitung (170) in der Nähe der Öffnung des V-Falzes (584) angeordnet ist.

6. Antriebseinheit (151) nach einem der Ansprüche 1 bis 3, **dadurch gekennzeichnet, dass** sich die Schutzplatte (682) horizontal über die Breite des Rahmens (180) erstreckt und dass sie zu der Längsachse (X) parallele Rippen (684) umfasst.

7. Antriebseinheit (151) nach einem der Ansprüche 1 bis 3, **dadurch gekennzeichnet, dass** die Schutzplatte (782) die Form einer gewellten Platte annimmt.

8. Antriebseinheit (151) nach einem der Ansprüche 1 bis 3, **dadurch gekennzeichnet, dass** die Schutzplatte (882) die Form eines V-Profils annimmt, dessen Spitze zu der Längsachse (X) gerichtet ist, und wobei die Versorgungsleitung (170) im Inneren der Öffnung des V angeordnet ist.

9. Luftfahrzeug (100), das eine Tragfläche (104), einen Wasserstofftank (172) und mindestens eine Antriebseinheit (151) nach einem der vorhergehenden Ansprüche aufweist, wobei der Rahmen (180) an der Tragfläche (104) befestigt ist und wobei die Versorgungsleitung (170) mit dem Wasserstofftank (172) fluidisch verbunden ist.

## Claims

1. Powerplant (151) for an aircraft (100) comprising:
- a frame (180),
- a propulsion system (150) fastened to the frame (180) and comprising a core (152) enclosed in a casing (154) and comprising a combustion chamber (158) and a turbine (160) provided with blades (161) rotating about a longitudinal axis (X),
- a supply pipe (170) intended to convey dihydrogen to the combustion chamber (158), in which the supply pipe (170) snakes outside the casing (154) running along the turbine (160) before dropping down into the combustion chamber (158) through the casing (154), and
- a protective plate (182) fastened to the frame (180) by fastening means (184) and positioned, on one hand, between the casing (154) and the supply pipe (170) and, on the other hand, between the supply pipe (170) and the turbine (160), the powerplant (151) being **characterized in that** the fastening means (184) comprise a front fastening system (902) arranged at a front part (906) of the protective plate (182) and two lateral fastening systems (904) positioned on either side of a vertical mid-plane (P') of the protective plate (182) behind the front part (906), where the front fastening system (902) comprises a front rod (908) hingedly fastened by a first connection point (910a) to the frame (180) at the mid-plane (P') of the protective plate (182) and by two second connection points (910b-c) to the protective plate (182), in which the second connection points (910b-c) are positioned on either side of the mid-plane (P') of the protective plate (182), and where each lateral fastening system (904) comprises a lateral rod (912) hingedly fastened by a first connection point (914a) to the frame (180) and by two second connection points (914b-c) to the protective plate (182).

2. Powerplant (151) according to Claim 1, **characterized in that** a front end of the protective plate (182) is positioned, perpendicular to the longitudinal axis (X), at least level with the foremost blades (161) of the turbine (160), and the rear end of the protective plate (182) is positioned, perpendicular to the longitudinal axis (X), at least level with the rearmost blades (161) of the turbine (160).

3. Powerplant (151) according to Claim 2, **characterized in that** the protective plate (182) extends in front of the foremost blades (161) of the turbine (160) and behind the rearmost blades (161) of the turbine (160).

4. Powerplant (151) according to one of Claims 1 to 3, **characterized in that**, viewed from the front, the turbine (160) rotates in a clockwise direction (402), **in that** the supply pipe (170) is positioned on the starboard side relative to a mid-plane (XZ) of the propulsion system (150) and above the casing (154), and **in that** the protective plate (482) extends on the starboard side horizontally over generally half of the width of the frame (180).

5. Powerplant (151) according to one of Claims 1 to 3, **characterized in that** the protective plate (582) extends horizontally over the width of the frame (180) and has a V-shaped crease (584) the point of which is oriented towards the longitudinal axis (X) and in which the supply pipe (170) is positioned in the vicinity of the opening of said V-shaped crease (584).

6. Powerplant (151) according to one of Claims 1 to 3, **characterized in that** the protective plate (682) extends horizontally over the width of the frame (180) and **in that** it has ribs (684) parallel to the longitudinal axis (X).

7. Powerplant (151) according to one of Claims 1 to 3, **characterized in that** the protective plate (782) takes the form of a corrugated plate.

8. Powerplant (151) according to one of Claims 1 to 3, **characterized in that** the protective plate (882) takes the form of a V-shaped section the point of which is oriented towards the longitudinal axis (X) and in which the supply pipe (170) is positioned inside the opening of said V.

9. Aircraft (100) comprising a wing (104), a dihydrogen tank (172) and at least one powerplant (151) according to one of the preceding claims, in which the frame (180) is fastened to the wing (104) and in which the supply pipe (170) is fluidly connected to the dihydrogen tank (172).
